# FASCICULE DE BREVET EUROPEEN

(11) **EP 3 402 095 B1**
(45) Date de publication et mention de la délivrance du brevet: **13.11.2019**
(21) Numéro de dépôt: 18164640.7
(22) Date de dépôt: 28.03.2018
(51) Int. Cl.: H04B 10/114, G04R 20/26, G04C 11/00, G04G 5/00, G04G 21/04

(54) **PROCÉDÉ DE TRANSMISSION ASYNCHRONE DE DONNÉES D'UN APPAREIL ÉLECTRONIQUE VERS UNE MONTRE ÉLECTRONIQUE**
ASYNCHRONES DATENÜBERTRAGUNGSVERFAHREN EINES ELEKTRONISCHEN GERÄTS AUF EINE ELEKTRONISCHE UHR
METHOD FOR ASYNCHRONOUS DATA TRANSMISSION FROM AN ELECTRONIC APPARATUS TO AN ELECTRONIC WATCH

(30) Priorité: 25.04.2017 EP 17167994
(43) Date de publication de la demande: 14.11.2018
(73) Titulaire: ETA SA Manufacture Horlogère Suisse, 2540 Grenchen (CH)
(72) Inventeur: BONNET, Thierry, 1205 Genève (CH)
(74) Mandataire: ICB SA

(56) Documents cités:
- EP-A1- 2 903 187
- EP-A2- 1 968 215
- GB-A- 2 524 523
- US-A1- 2016 266 554
- US-A1- 2016 299 475

## Description

### DOMAINE TECHNIQUE

La présente invention se rapporte au domaine des montres électroniques. Elle concerne plus particulièrement un procédé de transmission de données d'un appareil électronique vers une montre électronique.

### ART ANTERIEUR

Les montres dites « connectées », aptes à communiquer avec un appareil électronique tel qu'un smartphone, se sont imposées ces dernières années dans le milieu horloger. Le réglage d'une telle montre peut s'effectuer manuellement, notamment via l'activation de boutons poussoirs, de couronnes et/ou de touches tactiles, ce qui est relativement contraignant pour l'utilisateur ou le service après-vente chargé du réglage.

Pour éviter ces inconvénients, il est maintenant possible de régler une montre électronique de façon automatique, en l'équipant de dispositifs supportant la technologie Bluetooth Low Energy ou une technologie de communication en champ proche. Cependant, ces dispositifs sont assez complexes à mettre en place et demandent à incorporer des moyens de communication spécifiques tant sur l'appareil électronique que sur la montre, notamment des antennes. Ils doivent également être certifiés ce qui occasionne un surcoût supplémentaire.

Dans la demande de brevet EP16157655, il a été proposé une nouvelle façon de transférer des données de réglage à une montre électronique à partir d'un appareil électronique, typiquement un smartphone, plus simple et moins onéreuse que les solutions précédemment citées. Pour cela, la montre comporte un phototransistor destiné à détecter des signaux lumineux en provenance d'une source lumineuse de l'appareil électronique. Ces signaux lumineux codent des données par l'intermédiaire d'une modulation à deux états : présence ou absence de lumière. Cependant ce type de modulation optique bipolaire présente l'inconvénient de ne permettre que des débits de transmission relativement faibles.

On connait aussi le document US2016/299475 qui se rapporte à un système de communication comprenant une montre et un support.

### RESUME DE L'INVENTION

La présente invention a pour but de remédier aux inconvénients présentés dans la partie précédente, en proposant un procédé de transmission optique amélioré.

A cet effet, l'invention concerne un procédé de transmission de données d'un appareil électronique vers une montre électronique selon la revendication 1.

Le codage des données étant réalisé sous la forme de signaux lumineux à au moins quatre états, on dira que les signaux codent ces données par l'intermédiaire d'une modulation optique à au moins quatre niveaux, appelée plus simplement modulation optique multiniveaux. Par multi, on entendra donc au moins quatre.

Ce procédé présente l'avantage de pouvoir être mis en oeuvre de manière majoritairement automatique, sans que l'utilisateur n'ait à effectuer de réglage complexe via des couronnes, boutons poussoirs ou touches tactiles par exemple. Naturellement, le procédé doit être amorcé, ce qui peut être réalisé soit manuellement via appui sur un bouton poussoir, soit automatiquement, par exemple via un système en veille par défaut qui se réveille à réception d'une certaine séquence lumineuse. La transmission automatisée de données entre l'appareil électronique et la montre électronique permet de faciliter grandement la programmation de la montre. Elle permet également d'éviter les erreurs ou les imprécisions résultant d'une configuration manuelle. Elle offre à l'utilisateur la possibilité d'utiliser l'interface plus conviviale de l'appareil électronique, typiquement une application d'un smartphone, pour sélectionner et configurer les données à transférer à la montre. Toutes sortes de données peuvent être transmises par ce moyen, y compris de courts messages, sous réserve des capacités d'affichage de la montre. Ainsi on pourra effectuer facilement la mise à l'heure, les changements d'heure, le réglage d'une alarme, le réglage du quantième, ou transmettre d'autres informations comme les phases de lune, les horaires et coefficients des marées, les horaires de couché et de lever du soleil, etc.

En outre, ce procédé présente l'avantage de ne pas nécessiter d'incorporer d'antennes de communication (onéreuses, encombrantes et parfois incompatibles avec des habillages métalliques) sur la montre ou l'appareil électronique, le système de communication optique entre la montre et l'appareil électronique n'étant constitué que d'une source lumineuse ponctuelle de type diode électroluminescente et d'un capteur optique de type phototransistor.

Enfin, le procédé selon l'invention est particulièrement avantageux en ce qu'il permet une transmission asynchrone à débit plus élevé que dans le cas d'une modulation optique bipolaire.

L'émission de signaux lumineux sur au moins quatre niveaux d'intensité lumineuse permet d'accélérer la transmission. En effet, au lieu de détecter si la source lumineuse est allumée ou éteinte comme c'est le cas dans la demande EP16157655, c'est-à-dire détecter des niveaux d'intensité parmi deux possibilités, on détecte le niveau d'intensité lumineuse de ladite source parmi au moins quatre possibilités. Le débit est donc au moins doublé (en particulier, il est doublé si la source lumineuse peut prendre quatre et seulement quatre niveaux d'intensité lumineuse différents).

En outre, le procédé comporte une étape d'émission d'une séquence de signaux lumineux à deux niveaux d'intensité correspondant à des phases d'horloge, simultanément à l'étape d'émission de la séquence de signaux lumineux correspondant aux données à transmettre, par une deuxième source lumineuse de l'appareil électronique, et une étape de détection d'une succession des deux niveaux d'intensité lumineuse par un deuxième phototransistor de la montre, de sorte à reconstituer l'horloge, les deux séquences de signaux lumineux étant émises sur deux longueurs d'ondes distinctes. Naturellement, l'horloge est utilisée dans l'étape de décodage de la séquence de données.

Le procédé selon l'invention peut comprendre l'une ou une combinaison techniquement possible des caractéristiques suivantes.

Dans un mode de réalisation non limitatif, l'étape de détection comporte en outre une sous-étape de resynchronisation consistant à réinitialiser un compteur de périodes d'échantillonnage de la montre à détection d'un changement de luminosité par le phototransistor et à condition que les périodes d'échantillonnage comptées par le compteur soient comprises entre deux valeurs seuil.

Dans un mode de réalisation non limitatif, les niveaux d'intensité lumineuse de l'ensemble sont répartis régulièrement sur une échelle de luminosité.

Dans un mode de réalisation non limitatif, le procédé comporte une étape supplémentaire de génération d'un compte-rendu de transmission.

Dans un mode de réalisation non limitatif, l'étape de génération d'un compte-rendu de transmission comprend une émission d'un signal lumineux par une diode électroluminescente de la montre.

Dans un mode de réalisation non limitatif, l'étape de génération d'un compte-rendu de transmission comprend un positionnement des moyens d'affichage de la montre.

Dans un mode de réalisation non limitatif, le procédé comprend une étape supplémentaire d'analyse d'une image du cadran de la montre prise par une caméra de l'appareil électronique, suite au positionnement des moyens d'affichage de la montre.

Dans un mode de réalisation non limitatif, l'appareil électronique est portable, notamment de type smartphone ou tablette électronique.

Par « appareil électronique portable », on entend un appareil électronique, aussi appelé terminal utilisateur, capable d'être porté et transporté par un utilisateur, et d'être fonctionnel lors de son transport. C'est le cas par exemple d'un smartphone. Naturellement, les appareils nécessitant une alimentation secteur, par exemple les ordinateurs de bureau, sont exclus de cette définition. Les ensembles d'appareils, par exemple un ordinateur portable auquel un périphérique est connecté par liaison sans fil ou filaire sont également exclus de cette définition.

Ce procédé présente l'avantage de nécessiter très peu de matériel : un appareil portable de type smartphone avec une application mobile appropriée suffit à le mettre en œuvre. Le procédé ne requiert pas l'utilisation de matériel dédié tel qu'un capteur à brancher à un ordinateur, ni de matériel encombrant. N'importe quelle personne (par exemple un horloger) disposant d'un smartphone ayant l'application appropriée pourrait mettre en œuvre le procédé.

Dans un mode de réalisation non limitatif, la source lumineuse est une zone d'un écran d'affichage de l'appareil électronique.

Dans un mode de réalisation non limitatif, la source lumineuse est une diode électroluminescente servant également de flash pour l'appareil électronique.

### BREVE DESCRIPTION DES FIGURES

Les détails de l'invention apparaîtront plus clairement à la lecture de la description qui suit, faite en référence aux dessins annexés dans lesquels :
- la figure 1 représente une montre, vue côté cadran, recevant, par l'intermédiaire d'un phototransistor, un signal lumineux émis par une diode électroluminescente d'un smartphone aussi utilisée en tant que flash dudit smartphone, ledit smartphone étant vu côté dos
- la figure 2 représente une montre, vue côté fond, recevant, par l'intermédiaire d'un phototransistor, un signal lumineux émis par une portion d'un écran de smartphone, le phototransistor étant positionné en vis-à-vis de ladite portion, le smartphone étant vu côté écran
- la figure 3 représente des niveaux d'intensité lumineuse émis par une source lumineuse d'un appareil électronique portable, avant et après une étape de calibration du procédé selon un mode de réalisation de l'invention
- la figure 4 représente des étapes du procédé selon un mode de réalisation de l'invention.

### DESCRIPTION DETAILLEE

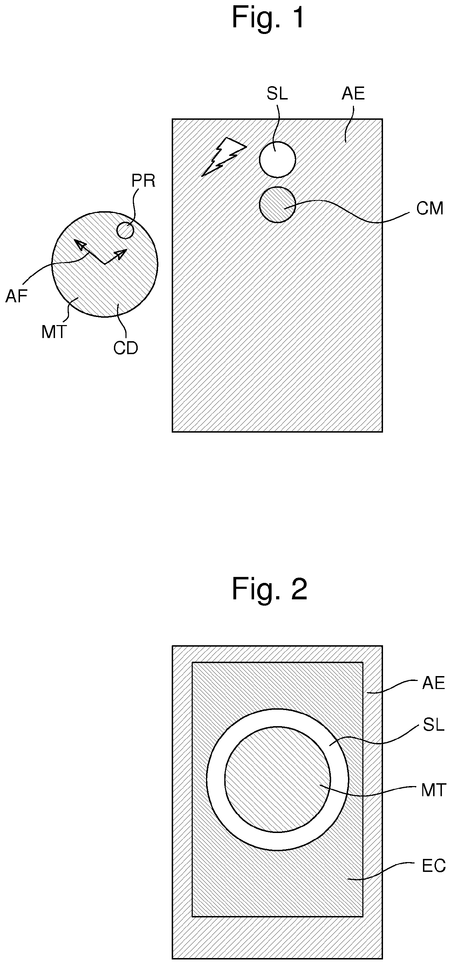

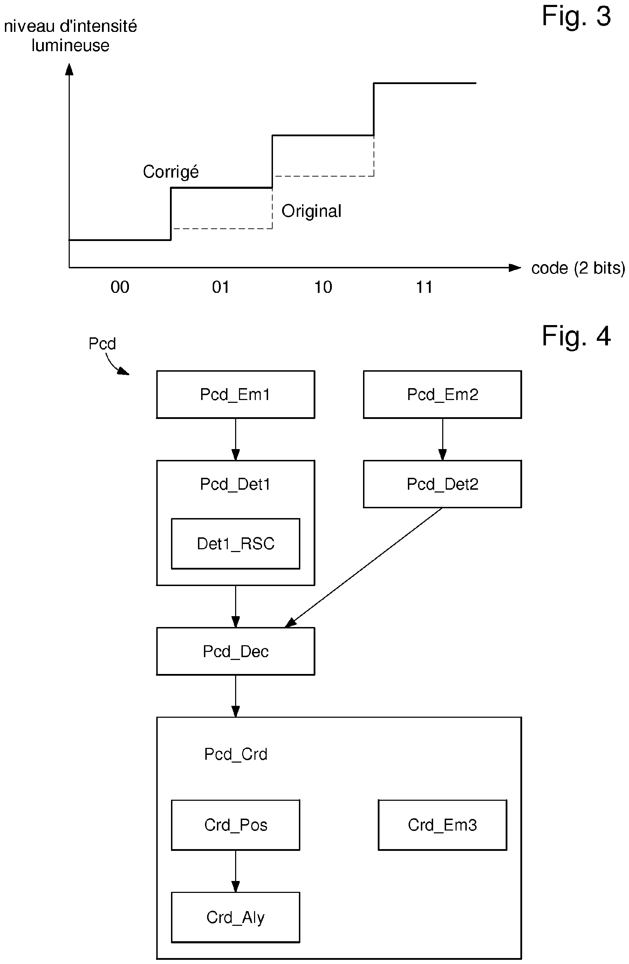

Les figures 1 et 2 représentent une montre électronique MT et un appareil électronique AE aptes à mettre en œuvre le procédé de transfert de données selon l'invention représenté à la figure 4. Plus particulièrement, la montre MT est équipée d'un phototransistor PR connecté à un microcontrôleur (non représenté) de la montre MT. Le procédé de transmission consiste à émettre (étape Em1) une séquence de signaux lumineux par une source lumineuse SL de l'appareil électronique AE sur au moins quatre niveaux distincts d'intensité lumineuse, à recevoir (étape Pcd_Det1, Det1_Rsc) la séquence de signaux lumineux par le phototransistor PR de la montre MT, et à convertir (étape Pcd_Dec) la séquence reçue en signal exploitable.

Dans une première configuration représentée à la figure 1, le phototransistor PR est situé sous le cadran CD de la montre MT, en vis-à-vis d'une ouverture laissant passer la lumière. Dans une autre configuration, le phototransistor PR est situé du côté du fond de la montre MT qui est au moins partiellement transparent pour laisser passer la lumière ou qui possède une trappe amovible. Naturellement, de nombreuses autres configurations peuvent être envisagées.

Le transfert de données depuis l'appareil électronique AE s'effectue par l'intermédiaire de la source lumineuse SL, par exemple un flash ou un écran EC dudit appareil AE. Dans la configuration représentée à la figure 1, l'appareil électronique AE est un smartphone et l'émission des signaux lumineux est réalisée via le flash du smartphone qui constitue la source lumineuse. Le flash étant situé au dos de l'appareil il est possible d'utiliser l'écran EC de l'appareil AE pour gérer l'application de transfert à l'aide de l'écran EC du smartphone pendant les transferts de données tout en contrôlant visuellement les modifications apportées à l'affichage de la montre MT.

Dans la configuration représentée à la figure 2, l'appareil électronique AE est un smartphone et l'émission des signaux lumineux est réalisée via l'écran EC du smartphone. Plus précisément, l'écran EC comporte une zone en forme de disque, dont le niveau de luminosité est homogène, ladite zone constituant la source lumineuse SL. La montre MT est placée directement contre ou face à l'écran EC du smartphone, en vis-à-vis du disque lumineux. Dans ce cas, l'application doit être configurée avant d'effectuer le transfert et, si le cadran CD de la montre MT n'est pas visible, une étape de contrôle du transfert de données doit être effectuée après l'opération. Cette configuration présente l'avantage d'être moins sensible aux perturbations lumineuses extérieures que la configuration de la figure 1.

Dans une variante d'exécution de la configuration précédente, l'écran EC peut être séparé en deux zones afin de circonscrire la source lumineuse à l'une des zones de l'écran EC. La zone restante de l'écran EC est réservée à l'interface utilisateur de l'application contrôlant le transfert de données. La transmission de données et le contrôle de son exécution se trouvent ainsi facilités.

On note que l'appareil électronique AE représenté est de type portable, mais il pourrait alternativement être un périphérique connecté à un ordinateur de bureau, par exemple par liaison USB, ce périphérique comprenant une source lumineuse telle que décrite dans les paragraphes précédents (une diode électroluminescente ou une portion d'un écran du périphérique). Cette variante présente l'avantage de pouvoir accroitre la vitesse de modulation qui pourrait être limitée par les performances des appareils électroniques portables de type smartphone.

Le transfert de données peut être effectué à l'aide de différents types de modulation optique. Comme évoqué précédemment, une modulation bipolaire de type NRZ est facile à mettre en œuvre mais présente des performances limitées. Il est donc avantageux de profiter des possibilités des écrans ou des flashs des smartphones (ou plus généralement des écrans ou flashs d'appareils électroniques portables) pour réaliser une modulation optique multiniveaux. Les écrans et les flashs récents peuvent en effet généralement émettre sur au moins 4 niveaux d'intensité lumineuse distincts (dont un niveau peut par exemple correspondre à l'état « pas d'émission de lumière »).

Par ailleurs, il est avantageux de choisir une fréquence d'échantillonnage de la montre MT qui soit beaucoup plus grande que la fréquence théorique d'émission de l'appareil électronique AE, de sorte à s'affranchir des possibles variations de la période d'émissions. Typiquement, la fréquence d'échantillonnage est choisie 16 fois plus grande que la fréquence d'émission.

En outre, le procédé selon l'invention comprend avantageusement une étape de resynchronisation mettant en œuvre un compteur de périodes d'échantillonnage de la montre MT. Dans le cas d'une fréquence d'échantillonnage 16 fois plus grande que la fréquence d'émission, aucune transition (de 0 à 1, ou inversement) ne devrait être détectée durant les 8 premières périodes d'échantillonnage comptées par le compteur. Si une telle transition existe, elle est interprétée comme une erreur. Ce genre d'erreur résulte par exemple d'un scintillement de la source lumineuse qui serait interprété, à tort, comme un changement de niveau. En revanche, une transition est recherchée dans les 12 périodes d'échantillonnage suivant les 8 premières périodes d'échantillonnage. Si une telle transition est détectée, alors le bit précédent est enregistré et le compteur est remis à sa valeur initiale.

De plus, lorsqu'aucune transition n'est détectée pendant un nombre de périodes d'échantillonnage important, il y a un risque de déphasage entre l'appareil électronique AE émetteur et la montre MT réceptrice dû à l'instabilité de la fréquence d'émission du signal codé. Il est intéressant dans ce cas d'utiliser la technique du « bit stuffing » qui consiste à ajouter des transitions fictives permettant de resynchroniser régulièrement le récepteur avec l'émetteur. Par exemple, dans une transmission d'une longue série de bits de valeur zéro, on introduit un bit de valeur un après une série de cinq zéro. Du côté récepteur, la procédure inverse est effectuée : après détection de cinq bits successifs de valeur zéro, un bit de valeur un est attendu. Si ce n'est pas le cas, il est déterminé qu'une erreur s'est produite. Si c'est le cas, le bit de valeur un n'est pas pris en compte pour le décodage et le compteur est réinitialisé.

Selon un mode de réalisation du procédé selon l'invention, le procédé de transmission comporte une étape de calibration des niveaux d'intensité lumineuse émis par la source lumineuse de la montre MT. Ces niveaux sont calibrés de telle sorte qu'ils soient répartis régulièrement par rapport à une échelle de luminosité, c'est-à-dire de telle sorte que l'écart de luminosité entre deux niveaux les plus proches est constant. Cette étape permet d'optimiser la distinction des différents niveaux de luminosité afin d'éviter les erreurs de lecture de niveau du côté récepteur. Un exemple est représenté à la figure 3. Cette figure montre des niveaux de luminosité en fonction des données à coder, avant calibrage (courbe « original ») et après calibrage (courbe « corrigé »).

En outre, la montre MT est équipée de deux phototransistors aptes à recevoir des longueurs d'ondes distinctes, par exemple celle correspondant au bleu pour le premier phototransistor et celle correspondant au rouge pour le deuxième phototransistor. De même, l'appareil électronique AE est équipé de deux sources lumineuses aptes à émettre sur ces deux longueurs d'ondes. Dans ce cas, l'une des sources transmet les données de manière asynchrone, tandis que l'autre source lumineuse transmet (étapes Pcd_Em2, Pcd_Det2) un signal d'horloge, ceci afin que le récepteur puisse se synchroniser sur l'émetteur.

Dans un mode de réalisation, le procédé comporte une étape de génération d'un compte rendu de transmission (étape Pcd_Crd), le compte-rendu étant produit par la montre MT à destination de l'utilisateur ou de l'appareil électronique AE. Par exemple, à la fin d'une opération de transmission, des moyens d'affichage de la montre AF (par exemple les aiguilles des heures, minutes et secondes) de la montre peuvent être positionnées (étape Crd_Pos) de telle sorte à signifier la réussite ou l'échec de la transmission. Cette position particulière des moyens d'affichage AF peut être relevée par l'utilisateur qui est ainsi informé du déroulé de la transmission. Alternativement, l'appareil électronique AE peut, grâce à sa caméra CM et à des moyens d'analyse d'image, analyser (étape Crd_Aly) la position des moyens d'affichage AF de la montre MT et en déduire si la transmission a été effectuée correctement ou non. Il est également possible d'ajouter sur la montre MT une diode électroluminescente capable d'émettre (étape Crd_Em3), à la fin d'une transmission, une courte séquence destinée à être reçue par un phototransistor de l'appareil électronique AE. Suivant la séquence, l'appareil électronique AE peut déterminer si la transmission s'est déroulée correctement.

En conclusion, la transmission optique multiniveau asynchrone entre un appareil électronique et une montre permet d'augmenter le débit de la transmission. Naturellement, l'homme du métier saura réaliser de multiples variations à partir des modes de réalisation présentés sans sortir du cadre des revendications.

## Revendications

1. Procédé (Pcd) de transmission de données d'un appareil électronique (AE) vers une montre électronique (MT), comportant les étapes suivantes :
- émettre (Pcd_Em1) une première séquence de signaux lumineux par une première source lumineuse (SL) de l'appareil électronique (AE), chaque signal présentant un niveau d'intensité lumineuse appartenant à un ensemble d'au moins quatre niveaux d'intensité lumineuse, ladite première séquence correspondant à un codage des données à transmettre,
- émettre (Pcd_Em2) une deuxième séquence de signaux lumineux à deux niveaux d'intensité correspondant à des phases d'horloge, simultanément à l'étape d'émission (Pcd_Em1) de la séquence de signaux lumineux correspondant aux données à transmettre, par une deuxième source lumineuse (SL) de l'appareil électronique (AE),
- détecter (Pcd_Det1) des niveaux d'intensité lumineuse successifs par un premier phototransistor (PR) de la montre (MT), de sorte à reconstituer ladite première séquence,
- détecter (Pcd_Det2) une succession des deux niveaux d'intensité lumineuse par un deuxième phototransistor de la montre (MT), de sorte à reconstituer l'horloge, les deux séquences de signaux lumineux étant émises sur deux longueurs d'ondes distinctes,
- décoder (Pcd_Dec) la séquence de données au moyen de la séquence de phases d'horloge, afin de reconstituer les données.

2. Procédé (Pcd) de transmission selon l'une des revendications précédentes, ladite étape (Pcd_Det1) de détection des niveaux d'intensité lumineuse successifs comportant en outre une sous-étape de resynchronisation (Det1_Rsc) consistant à réinitialiser un compteur de périodes d'échantillonnage de la montre (MT) à détection d'un changement de luminosité par le premier phototransistor (PR) et à condition que les périodes d'échantillonnage comptées par le compteur soient comprises entre deux valeurs seuil.

3. Procédé (Pcd) de transmission selon l'une des revendications précédentes, les niveaux d'intensité lumineuse dudit ensemble étant répartis régulièrement sur une échelle de luminosité.

4. Procédé (Pcd) de transmission selon l'une des revendications précédentes **caractérisé en ce qu'**il comporte une étape supplémentaire de génération (Pcd_Crd) d'un compte-rendu de transmission.

5. Procédé (Pcd) de transmission selon la revendication précédente, l'étape de génération (Pcd_Crd) d'un compte-rendu de transmission comprenant une émission (Crd_Em3) d'un signal lumineux par une diode électroluminescente de la montre (MT).

6. Procédé (Pcd) de transmission selon la revendication 4, l'étape de génération (Pcd_Crd) d'un compte-rendu de transmission comprenant un positionnement (Crd_Pos) des moyens d'affichage (AF) de la montre (MT).

7. Procédé (Pcd) de transmission selon la revendication précédente, comprenant une étape supplémentaire d'analyse (Crd_Aly) d'une image du cadran (CD) de la montre (MT) prise par une caméra (CM) de l'appareil électronique (AE), suite au positionnement des moyens d'affichage (AF) de la montre (MT).

8. Procédé (Pcd) de transmission selon l'une des revendications précédentes, **caractérisé en ce que** l'appareil électronique (AE) est portable, notamment de type smartphone ou tablette électronique.

9. Procédé (Pcd) de transmission selon l'une des revendications précédentes, **caractérisé en ce que** la source lumineuse (SL) est une zone d'un écran d'affichage (EC) de l'appareil électronique (AE).

10. Procédé (Pcd) de transmission selon l'une des revendications 1 à 8, **caractérisé en ce que** la source lumineuse (SL) est une diode électroluminescente servant également de flash pour l'appareil électronique (AE).

## Patentansprüche

1. Datenübertragungsverfahren (Pcd) eines elektronischen Geräts (AE) auf eine tragbare elektronische Uhr (MT), umfassend die folgenden Schritte:
- Senden (Pcd_Em1) einer ersten Folge von Lichtsignalen durch eine erste Lichtquelle (SL) des elektronischen Geräts (AE), wobei jedes Signal eine Lichtintensitätsstufe aufweist, die zu einem Satz von mindestens vier Lichtintensitätsstufen gehört, wobei die erste Folge einer ersten Codierung von zu übertragenden Daten entspricht,
- Senden (Pcd_Em2) einer zweiten Folge von Lichtsignalen mit zwei Intensitätsstufen, die Taktphasen entsprechen, gleichzeitig mit dem Schritt (Pcd_Em1) zum Senden der Folge von Lichtsignalen, die den zu übertragenden Daten entsprechen, durch eine zweite Lichtquelle (SL) des elektronischen Geräts (AE),
- Erfassen (Pcd_Det1) der aufeinander folgenden Lichtintensitätsstufen durch einen ersten Fototransistor (PR) der tragbaren Uhr (MT), derart, dass die erste Folge wiederhergestellt wird,
- Erfassen (Pcd_Det2) einer Folge der zwei Lichtintensitätsstufen durch einen zweiten Fototransistor der tragbaren Uhr (MT), derart, dass der Takt wiederhergestellt wird, wobei die zwei Folgen von Lichtsignalen auf zwei verschiedenen Wellenlängen gesendet werden,
- Decodieren (Pcd_Dec) der Folge von Daten mittels der Folge von Taktphasen, um die Daten wiederherzustellen.

2. Übertragungsverfahren (Pcd) nach dem vorhergehenden Anspruch, wobei der Erfassungsschritt (Pcd_Det1) aufeinander folgender Lichtintensitätsstufen ferner einen Neusynchronisations-Unterschritt (Det1_Rsc) umfasst, der darin besteht, einen Abtastperiodenzähler der tragbaren Uhr (MT) beim Erfassen einer Helligkeitsänderung durch den ersten Fototransistor (PR) und unter der Voraussetzung, dass die durch den Zähler gezählten Abtastperioden zwischen zwei Schwellenwerten liegen, zurückzusetzen.

3. Übertragungsverfahren (Pcd) nach einem der vorhergehenden Ansprüche, wobei die Lichtintensitätsstufe des Satzes auf einer Helligkeitsskala regelmäßig verteilt sind.

4. Übertragungsverfahren (Pcd) nach einem der vorhergehenden Ansprüche, **dadurch gekennzeichnet, dass** es einen zusätzlichen Schritt zum Erzeugen (Pcd_Crd) eines Übertragungsprotokolls umfasst.

5. Übertragungsverfahren (Pcd) nach dem vorhergehenden Anspruch, wobei der Schritt (Pcd_Crd) zum Erzeugen eines Übertragungsprotokolls das Senden (Crd_Em3) eines Lichtsignals durch eine Leuchtdiode der tragbaren Uhr (MT) umfasst.

6. Übertragungsverfahren (Pcd) nach Anspruch 4, wobei der Schritt (Pcd_Crd) zum Erzeugen eines Übertragungsprotokolls eine Positionierung (Crd_Pos) von Anzeigemitteln (AF) der tragbaren Uhr (MT) umfasst.

7. Übertragungsverfahren (Pcd) nach dem vorhergehenden Anspruch, das nach der Positionierung der Anzeigemittel (AF) der Uhr (MT) einen zusätzlichen Schritt (Crd_Aly) zum Analysieren eines Bildes des Zifferblatts (Cd) der tragbaren Uhr (MT), das durch eine Kamera (CM) des elektronischen Geräts (AE) aufgenommen wird, umfasst.

8. Übertragungsverfahren (Pcd) nach einem der vorhergehenden Ansprüche, **dadurch gekennzeichnet, dass** das elektronische Gerät (AE) tragbar ist und insbesondere vom Typ Smartphone oder elektronisches Tablet ist.

9. Übertragungsverfahren (Pcd) nach einem der vorhergehenden Ansprüche, **dadurch gekennzeichnet, dass** die Lichtquelle (SL) ein Bereich des Bildschirms (EC) des elektronischen Geräts (AE) ist.

10. Übertragungsverfahren (Pcd) nach einem der Ansprüche 1 bis 8, **dadurch gekennzeichnet, dass** die Lichtquelle (SL) eine Leuchtdiode ist, die außerdem als Blitzlicht für das elektronische Gerät (AE) dient.

## Claims

1. Method (Pcd) for transmitting data from an electronic device (AE) to an electronic watch (MT), including the following steps:
- emitting (Pcd_Em1) a first sequence of light signals with a first light source (SL) of the electronic device (AE), each signal having a light-intensity level belonging to a set of at least four light-intensity levels, said sequence corresponding to a code of the data to be transmitted;
- emitting (Pcd_Em2) a second sequence of light signals at two intensity levels corresponding to clock phases, simultaneously to the step (Pcd_Em1) of emitting the sequence of light signals corresponding to the data to be transmitted, with a second light source (SL) of the electronic device (AE);
- detecting (Pcd_Det1) successive light-intensity levels with a first phototransistor (PR) of the watch (MT), so as to reconstitute the first sequence of data;
- detecting (Pcd_Det2) a succession of the two light-intensity levels with a second phototransistor of the watch (MT), so as to reconstitute the clock, the two sequences of light signals being emitted at two distinct wavelengths; and
- decoding (Pcd_Dec) the sequence of data by means of the sequence of clock phases, in order to reconstitute the data.

2. Transmitting method (Pcd) according to the preceding claim, said successive light-intensity levels detecting step (Pcd_Det1) furthermore including a re-synchronizing substep (Det1_Rsc) consisting in resetting a counter of sampling periods of the watch (MT) on detection of a brightness change by the first phototransistor (PR) and provided that the sampling periods that have been counted by the counter are comprised between two threshold values.

3. Transmitting method (Pcd) according to one of the preceding claims, the light-intensity levels of said set being regularly distributed over a brightness scale.

4. Transmitting method (Pcd) according to one of the preceding claims, **characterized in that** it includes an additional step (Pcd_Crd) of generating feedback on the transmission.

5. Transmitting method (Pcd) according to the preceding claim, the step (Pcd_Crd) of generating feedback on the transmission comprising emitting (Crd_Em3) a light signal with a light-emitting diode of the watch (MT).

6. Transmitting method (Pcd) according to Claim 4, the step (Pcd_Crd) of generating feedback on the transmission comprising positioning (Crd_Pos) displaying means (AF) of the watch (MT).

7. Transmitting method (Pcd) according to the preceding claim, comprising an additional step (Crd_Aly) of analysing an image of the dial (CD) of the watch (MT), this image being taken by a video camera (CM) of the electronic device (AE) following the positioning of the displaying means (AF) of the watch (MT).

8. Transmitting method (Pcd) according to one of the preceding claims, **characterized in that** the electronic device (AE) is portable, and in particular a smart phone or an electronic tablet.

9. Transmitting method (Pcd) according to one of the preceding claims, **characterized in that** the light source (SL) is a zone of a display screen (EEC) of the electronic device (AE).

10. Transmitting method (Pcd) according to one of Claims 1 to 8, **characterized in that** the light source (SL) is a light-emitting diode that also serves as a flash for the electronic device (AE).
